(19) **Europäisches Patentamt / European Patent Office / Office européen des brevets**

(11) **EP 4 675 380 A1**

(12) **EUROPEAN PATENT APPLICATION**
published in accordance with Art. 153(4) EPC

(43) Date of publication:
07.01.2026  Bulletin 2026/02

(21) Application number: 23947325.9

(22) Date of filing: 02.11.2023

(51) International Patent Classification (IPC):
*G05B 19/418* (2006.01)

(86) International application number:
PCT/CN2023/129295

(87) International publication number:
WO 2025/025387 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  31.07.2023  CN 202310961022
17.10.2023  CN 202311349025

(71) Applicant: Hefei Gotion High-Tech Power Energy
Co., Ltd.
Hefei, Anhui 230012 (CN)

(72) Inventors:
• WANG, Mao
Hefei, Anhui 230012 (CN)
• XU, Jiawen
Hefei, Anhui 230012 (CN)
• XU, Yongjian
Hefei, Anhui 230012 (CN)
• QIN, Tian
Hefei, Anhui 230012 (CN)

(74) Representative: Novagraaf Technologies
Bâtiment O2
2, rue Sarah Bernhardt
CS90017
92665 Asnières-sur-Seine Cedex (FR)

(54) **LITHIUM BATTERY COATING DEVICE KEY PARAMETER-BASED QUALITY EARLY WARNING METHOD, APPARATUS, AND DEVICE**

(57)  Provided are a method, apparatus, and device for quality early warning on key parameters of a lithium battery coating device. The method includes: confirming coating process control parameters (S1); acquiring process data of the key control parameter, and transmitting the process data to a high-performance storage unit (S2); acquiring different control parameter configurations according to the process data, and selecting an applicable early warning model from no less than two early warning models (S3); selecting corresponding early warning criteria for the applicable early warning model (S4); performing a preprocessing check on coating process control state data in the process data to obtain control parameter check data (S6); according to the corresponding early warning criteria, performing window calculation on the control parameter check data using a Flink big data calculation framework, so as to obtain real-time key parameter early warning information (S7); and analyzing and processing the real-time key parameter early warning information to obtain coating process control data, so as to control coating process key control parameters to be in an applicable range (S8). The early warning method and device solve the technical problems of poor real-time performance of the early warning information and the inability to customize quality abnormality criteria.

Fig. 1

Start → S1: Coating process key control parameters are confirmed by means of expert scoring, brainstorming, Failure Mode and Effects Analysis (FMEA), statistics and analysis of historical issues, and the like

S2: Key control parameter process data is acquired by means of manual testing, automated device reporting, an Internet Of Things (IOT) platform, and the like, and provided to a high-performance storage unit

S3: An applicable early warning model is selected according to different control parameter configurations

S4: Corresponding applicable early warning rules are selected for the early warning model based on the control parameter configurations

S5: A data acquisition system is brought into communication with a device for the key control parameters to ensure prompt reporting of data

S6: A preprocessing check is performed on data acquired in real time

S7: Window calculation is performed using a Flink big data calculation framework to perform real-time early warning on key parameters

S8: On-site production personnel analyze and process early warning information to ensure the normal processing of the key control parameters in a single process

End

EP 4 675 380 A1

## Description

## Technical Field

The present disclosure relates to the field of lithium battery production, and in particular to a method, apparatus, and device for quality early warning on key parameters of a lithium battery coating device.

## Background

Coating is a front-end process in the process of lithium battery production. If the relevant coating quality is not properly controlled, rework may cause waste of raw materials, and unqualified coating rolls may flow downstream, which may have a greater impact on batch quality. Therefore, the coating quality has a significant impact on the quality of battery cells, such as excessive surface density or overweight battery cells, and uneven coating may cause capacity abnormalities. How to perform early warning control on the coating quality in the process of lithium battery production is particularly necessary.

The lithium battery coating process involves numerous key parameters, such as ambient temperature, ambient humidity, air cleanliness, magnetic flux, oven temperature, single-sided surface density, double-sided surface density, coating width, edge clearance width, symmetrical dislocation, peel strength, electrode plate moisture, and the like. Each control parameter exceeding the specification limit may lead to the generation of unqualified products. In the process of flow production, early warning is issued for abnormal processing parameters, which facilitates on-site personnel to capture problems in time and reduce the generation of unqualified products.

The existing Patent Application No. CN115701851A, entitled "Soft-Pack Lithium-Ion Battery Thickness Prediction Method", includes the following steps: creating a particle filter, and establishing a thickness model of a soft-pack lithium-ion battery; setting the number of charge and discharge cycles of a predicted starting point of the soft-pack lithium-ion battery, and calculating model parameters of the thickness model, so as to confirm a relationship between the number of charge and discharge cycles of the soft-pack lithium-ion battery and the full charge thickness of the soft-pack lithium-ion battery; and predicting the full-charge thickness of the soft-pack lithium-ion battery through the thickness model, and recording and taking the number of charge and discharge cycles of the soft-pack lithium-ion battery as the service life of the soft-pack lithium-ion battery. The abovementioned existing quality control methods uses offline analysis and training, and cannot analyze streaming data in the process of production and processing in real time. A process quality control chart is drawn offline, and early warning information is not prompt, which easily leads to unqualified products flowing into downstream processes, resulting in the amplification of product quality problems. The existing Patent Application No. CN115876589A, entitled "Simple and Convenient Evaluation Method for Flexibility of Electrode Plate of Lithium Battery", includes the following steps: (1) dispersing a positive active material, a conductive agent, a binder, and a solvent into uniform and stable positive electrode slurry; (2) coating a surface of a foil with the positive electrode slurry according to the loading capacity of the double-sided surface density of 340 to 400 $g/m^2$; (3) rolling with a small roller press to obtain a finished electrode film with a certain thickness; and (4) according to the size specification of conventional A5 paper, cutting and flatly placing electrode films A1, A2, A3, and A4 with four flat interfaces on a smooth glass plate, measuring gap thicknesses $\Delta H1$, $\Delta AH2$, $\Delta H3$, and $\Delta AH4$ of the electrode films A1, A2, A3, and A4 using a plug gage, recording fifteen pieces of data in a rolling direction, and drawing a box plot using minitab software. In the abovementioned related art, quality abnormality determination rules cannot be customized and configured, and quality management tools such as minitab cannot combine the existing quality abnormality determination rules with customizable dynamic check rules for quality early warning control. Therefore, a simple, fast, and effective quality early warning method is needed to monitor production and processing process parameters in real time and improve the coating quality.

In summary, there are technical problems of poor real-time performance of the early warning information and the inability to customize quality abnormality criteria in the related art.

## Summary

The technical problem to be solved by the present disclosure is how to solve the technical problems of poor real-time performance of early warning information and the inability to customize quality abnormality criteria in the related art.

The present disclosure uses the following technical solutions to solve the above technical problems.

In a first aspect, embodiments of the present disclosure provide a method for quality early warning on key parameters of a lithium battery coating device, including: confirming coating process control parameters; acquiring process data of the key control parameter, and transmitting the process data to a high-performance storage unit; acquiring different control parameter configurations according to the process data, and selecting an applicable early warning model from no less than two Statistical Process Control (SPC) process quality early warning models; selecting corresponding early warning criteria for the applicable early warning model; performing a preprocessing check on coating process control state data in the process data to obtain control parameter check data; according to the corresponding early warning criteria, performing window calculation on the control parameter check data using a Flink big data calculation framework, so as to obtain real-time key parameter early warning information; and analyzing and processing the real-time key parameter early warning information to obtain coating process control data, so as to control the coating process key control parameters to be in an applicable range.

In a second aspect, the embodiments of the present disclosure provide a system for quality early warning on key parameters of a lithium battery coating device, including: a parameter determination module, configured to confirm coating process control parameters; a process data acquisition and storage module, configured to acquire process data of the key control parameter, and transmit the process data to a high-performance storage unit, the process data acquisition and storage module being connected to the parameter determination module; a model selection module, configured to acquire different control parameter configurations according to the process data, and select an applicable early warning model from no less than two SPC process quality early warning models, the model selection module being connected to the process data acquisition and storage module; an early warning rule selection module, configured to select corresponding early warning criteria for the applicable early warning model, the early warning rule selection module being connected to the model selection module; a control state data check module, configured to perform a preprocessing check on coating process control state data in the process data to obtain control parameter check data, the control state data check module being connected to the process data acquisition and storage module; a real-time early warning information retrieval module, configured to, according to the corresponding early warning criteria, perform window calculation on the control parameter check data using a Flink big data calculation framework, so as to obtain real-time key parameter early warning information, the real-time early warning information retrieval module being connected to the control state data check module and the early warning rule selection module; and a process control module, configured to analyze and process the real-time key parameter early warning information to obtain coating process control data, so as to control the coating process key control parameters to be in an applicable range, the process control module being connected to the real-time early warning information retrieval module.

In a third aspect, the embodiments of the present disclosure provide a device for quality early warning on the key parameters of a lithium battery coating device, including a memory, a processor, a communication interface, and a bus. The memory may include a large capacity memory for data or instructions. By way of example, but not limitation, the memory may include a Hard Disk Drive (HDD), a floppy disk drive, a flash memory, an optical disk, a magneto-optical disk, a magnetic tape, or a Universal Serial Bus (USB) drive or a combination of two or more thereof. Where appropriate, the memory may include a removable or non-removable (or fixed) medium. Where appropriate, the memory may be inside or outside of a device for determining a battery operating voltage curve. In a specific embodiment, the memory is a non-volatile solid-state memory. In a specific embodiment, the memory includes a Read-Only Memory (ROM). Where appropriate, the ROM may be a mask-programmed ROM, a Programmable ROM (PROM), an Erasable PROM (EPROM), an Electrically EPROM (EEPROM), an Electrically Alterable ROM (EAROM) or a flash memory or a combination of two or more thereof.

Compared with the related art, the present disclosure has the following advantages that: the present disclosure performs preprocessing on big data in the process of production and processing after acquisition, makes full use of cluster resources, and perform real-time calculation and early warning on the big data calculation framework. Quality early warning is performed on the coating process using a simple and effective quality control method to improve the coating quality. The present disclosure is based on the SPC process quality control theory and cooperates with user-defined abnormality determination rules to perform quality early warning on the coating process key control parameters, which is conducive to early detection and early warning of the coating process abnormalities.

The present disclosure uses the Flink big data calculation framework to perform real-time early warning on the coating production process, where the early warning model is configurable, the early warning rules are configurable, the calculation is triggered according to a time window, the coverage is wide, and the early warning information is real-time and accurate.

The method of the present disclosure makes full use of the SPC process quality control theory, the big data real-time calculation framework, and the like, and combines the coating process in the process of lithium battery production to perform quality early warning control. The method of the present disclosure has the advantages of simplicity, effectiveness, and strong operability, is beneficial to improving the quality of the coating process and is convenient for popularization and application.

The present disclosure uses a mean-range chart ($\bar{X}$-R) in an SPC measurement control chart. Control objects include: measurement values such as length, weight, strength, thickness, and time. The mean-range chart has a wide application range and high sensitivity.

The present disclosure applies the individual-moving range control chart (X-MR) in the SPC control chart to perform process monitoring under specific conditions such as high measurement cost and consistent output properties at any time point, thereby ensuring the accuracy of measurement operation in specific scenarios.

The present disclosure solves the technical problems of poor real-time performance of the early warning information and the inability to customize the quality abnormality criteria.

## Brief Description of the Drawings

Fig. 1 is a schematic diagram of basic steps of a method for quality early warning on key parameters of a lithium battery coating device in one embodiment of the present disclosure.

Fig. 2 is a schematic diagram of a principle of a big data calculation framework in one embodiment of the present disclosure.

Fig. 3 is a schematic diagram of specific steps of calculating distribution of quality data using a histogram to estimate a rate of unqualified products in a process in one embodiment of the present disclosure.

Fig. 4 is a schematic diagram of specific implementation steps of a quality early warning control method in another embodiment of the present disclosure.

Fig. 5 is a schematic structural diagram of a device for quality early warning on the key parameters of a lithium battery coating device in one embodiment of the present disclosure.

## Detailed Description of the Embodiments

In order to make the objectives, technical solutions and advantages of the embodiments of the present disclosure clearer, the technical solutions in the embodiments of the present disclosure will be clearly and completely described in conjunction with the embodiments of the present disclosure. It is apparent that the described embodiments are only a part of the embodiments of the present disclosure, and not all of them. All other embodiments obtained by those of ordinary skill in the art based on the embodiments of the present disclosure without creative efforts are within the scope of protection of the present disclosure.

Embodiment 1

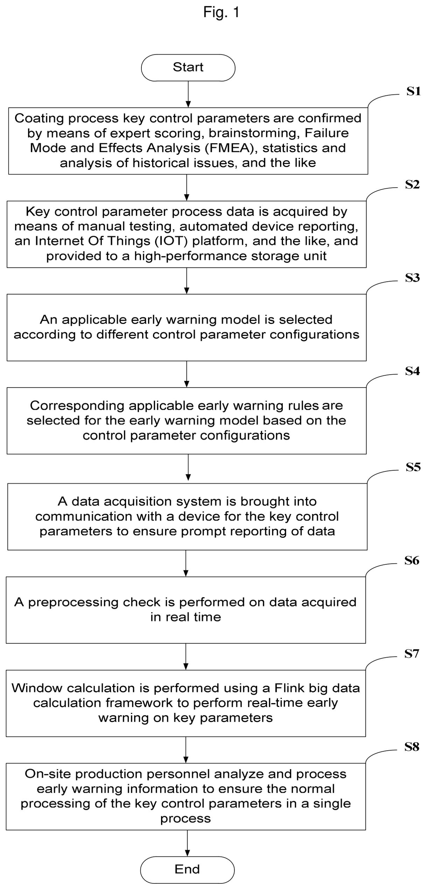

Fig. 1 is a schematic diagram of basic steps of a method for quality early warning on key parameters of a lithium battery coating device in one embodiment of the present disclosure. As shown in Fig. 1, the present disclosure provides a method for quality early warning on key parameters of a lithium battery coating device, including the following basic steps.

At S1, coating process key control parameters are confirmed by means of expert scoring, brainstorming, Failure Mode and Effects Analysis (FMEA), statistics and analysis of historical issues, and the like.

In the present embodiment, the key quality control parameters of the coating process are used.

In the present embodiment, the expert scoring method includes: inviting a company and a coating process expert in the lithium battery industry to classify and screen the parameters for controlling the coating quality, and identifying the key control parameters using expert knowledge.

In the present embodiment, the operation of statistics and analysis of the historical issues includes: refining key quality control points as the key control parameters according to a knowledge base formed by the company and the industry on coating defect analysis.

At S2, key control parameter process data is acquired by means of manual testing, automated device reporting, an Internet Of Things (IOT) platform, and the like, and provided to a high-performance storage unit. In the present embodiment, the high-performance storage unit may use, for example, a time series database.

At S3, an applicable early warning model is selected according to different control parameter configurations.

At S4, corresponding applicable early warning rules are selected for the early warning model based on control parameter configurations.

At S5, a data acquisition system is brought into communication with the device for the key control parameters to ensure prompt reporting of data.

At S6, a preprocessing check is performed on data acquired in real time.

At S7, window calculation is performed using a Flink big data calculation framework to perform real-time early warning on key parameters.

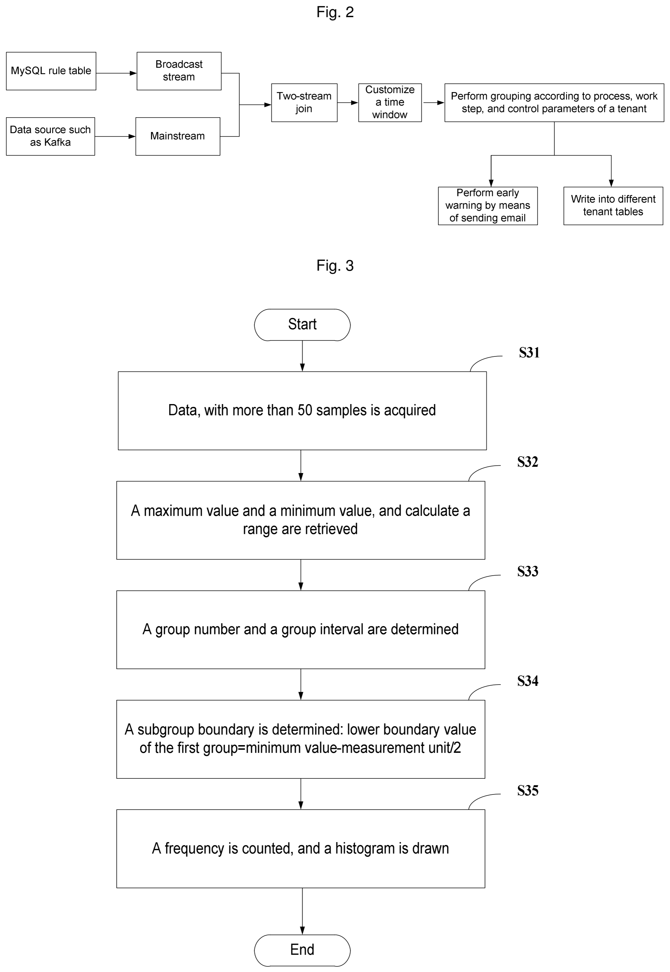

Fig. 2 is a schematic diagram of a principle of a big data calculation framework in one embodiment of the present disclosure. As shown in Fig. 2, in the present embodiment, the principle of the big data calculation framework includes the following operations.

Production and processing parameters are monitored using a Flink real-time calculation engine, and the early warning rules of each control parameter are combined to perform real-time early warning, so as to ensure the accuracy of early warning implementation.

MySQL control chart information and early earning rule information are monitored in real time using technologies such as Change Data Capture (CDC), and broadcast streams are formed.

The mainstream reads a Kafka data source and a broadcast stream join.

The window is rolled for calculation according to the customized early warning rule time.

Grouping and calculation are performed according to process, work step and control parameter information of each tenant in the streams.

Early warning is performed by email or other methods on data that does not meet the configured early warning rules.

The data is written to different tenant information tables at the same time.

At S8, On-site production personnel analyze and process early warning information to ensure the normal processing of the key control parameters in a single process.

In the present embodiment, the coating process key control parameters belonging to the front-end process, include, but are not limited to, ambient temperature, ambient humidity, air cleanliness, magnetic flux, oven temperature, single-side surface density, double-side surface density, coating width, edge clearance width, symmetrical dislocation, peel strength, and electrode plate moisture. Quality early warning on the key parameters of the lithium battery coating process requires real-time monitoring of the abovementioned key control parameters and configuration of the corresponding early warning rules to achieve the purpose of real-time early warning of the coating quality.

In the present embodiment, the early warning models available for selection include, but are not limited to, the following SPC process quality early control chart: a mean-range control chart, a mean-standard deviation control chart, an individual-moving range control chart, a pass rate chart, a histogram, and a trend chart.

In the present embodiment, a mean-range chart ($\overline{X}$-R) in an SPC measurement control chart is used in a mean-range control model. In the present embodiment, measurement values as control objects of the mean-range chart include, but are not limited to, measurement values such as length, weight, strength, thickness, and time.

In the present embodiment, the $\overline{X}$-R control chart includes the following indicators: a $\overline{X}$ control chart, a subgroup sample mean, an inter-group mean, a sample range, a range mean, a $\overline{X}$ chart upper control limit, a $\overline{X}$ chart center line, a $\overline{X}$ chart lower control limit, an R chart upper control limit, an R chart center line, and an R chart lower control limit.

In the present embodiment, in the $\overline{X}$ control chart, n is the sample size within the group, and m is the number of sampling groups.

In the present embodiment, the subgroup sample mean is calculated:

$$\overline{X}_i = \frac{X_1 + X_2 + ... + X_n}{n} = \frac{\sum\limits_{i=1}^{n} X_i}{n}.$$

In the present embodiment, the inter-group mean is calculated:

$$\overline{\overline{X}} = \frac{X_1 + X_2 + ... + X_m}{m} = \frac{\sum\limits_{i=1}^{m} X_i}{m}.$$

In the present embodiment, the sample range is calculated: $R_i = \max\{X_i\} - \min\{X_i\}$.

In the present embodiment, the range mean is calculated:

$$\overline{R} = \frac{R_1 + R_2 + ... + R_m}{m} = \frac{\sum\limits_{i=1}^{m} R_i}{m}.$$

In the present embodiment, the $\overline{X}$ chart upper

$$UCL = \overline{\overline{X}} + A_2 \overline{R}$$

control limit is: .

In the present embodiment, the $\overline{X}$ chart center line is: $CL = \overline{\overline{X}}$.

In the present embodiment, the $\overline{X}$ chart lower

$$LCL = \overline{\overline{X}} - A_2 \overline{R}$$

control limit is: .

In the present embodiment, the R chart upper control limit is: $UCL = D_4\overline{R}$.

In the present embodiment, the R chart center line is: $CL = \overline{R}$.

In the present embodiment, the R chart lower control limit is: $LCL = D_3\overline{R}$.

Where D4, D3, and A2 are constants that vary with the sample size, which may be obtained by looking up the table.

In the present embodiment, the mean-standard deviation control chart ($\overline{X}$-S) includes a mean (X) chart and a standard deviation (S) chart. Corresponding to the $\overline{X}$-R chart, the X chart is mainly configured to determine whether the mean of the production process is stable. The S chart is configured to determine the stability of the standard deviation of the production process. In the present embodiment, when the sample size within the group is greater than 5, the $\overline{X}$-S chart is used.

In the present embodiment, the indicators of the mean-standard deviation control chart ($\overline{X}$-S) include: a $\overline{X}$ control chart, a subgroup sample mean, an inter-group mean, a subgroup standard deviation, a standard deviation mean, an estimated standard deviation, a $\overline{X}$ control chart upper limit, a $\overline{X}$ control chart center line, a $\overline{X}$ control chart lower limit, an S control chart upper limit, an S control chart center line, and an S control chart lower limit.

In the present embodiment, in the $\overline{X}$ control chart, n is the sample size within the group, and m is the number of sampling groups.

In the present embodiment, the subgroup sample mean is calculated:

$$\overline{X}_i = \frac{X_1 + X_2 + ... + X_n}{n} = \frac{\sum\limits_{i=1}^{n} X_i}{n}.$$

In the present embodiment, the inter-group mean is calculated:

$$\overline{\overline{X}} = \frac{X_1 + X_2 + \ldots + X_m}{m} = \frac{\sum\limits_{i=1}^{m} X_i}{m} \ .$$

In the present embodiment, the subset standard

$$S_i = \sqrt{\frac{\sum\limits_{i=1}^{n} (X_i - \overline{X})^2}{n-1}} \ .$$

deviation is:

In the present embodiment, the standard devia-

$$\overline{S} = \frac{1}{m} \sum\limits_{i=1}^{m} S_i \ .$$

tion mean is:

In the present embodiment, the estimated stan-

$$\sigma = \frac{\overline{S}}{C_4}$$

dard deviation is: , and control chart coeffi-

cients may be obtained by looking up the table.

In the present embodiment, the $\overline{X}$ control chart

$$UCL = \overline{\overline{X}} + A_3 \overline{S}$$

upper limit is: , and control chart coefficients may be obtained by looking up the table.

In the present embodiment, the $\overline{X}$ control chart

$$CL = \overline{\overline{X}}$$

center line is: .

In the present embodiment, the $\overline{X}$ control chart

$$LCL = \overline{\overline{X}} - A_3 \overline{S}$$

lower limit is: .

In the present embodiment, the S control chart upper limit is: $UCLs = B_4 \overline{S}$, and control chart coefficients may be obtained by looking up the table.

In the present embodiment, the S control chart center line is: $CLs = \overline{S}$.

In the present embodiment, the S control chart lower limit is: $LCLs = B_3 \overline{S}$, and control chart coefficients may be obtained by looking up the table.

Where B4, B3, and A3 are constants that vary with the sample size, which may specifically be obtained by looking up the table.

In the present embodiment, in application scenarios where process control needs to be performed using application units rather than subgroups, the variation within subgroups is virtually zero, which usually occurs when the measurement cost is high (e.g., destructive testing), or when the output properties at any time point are relatively consistent (e.g., chemical solution pH). In these cases, the individual-moving range control chart (X-MR) in the SPC control chart may be applied to perform process monitoring.

In the present embodiment, a process mean of the individual-moving range control chart (X-MR) includes a mean, an upper control limit, a center line, a lower control limit, a moving range, a moving range mean, an upper control limit, a center line, and a lower control limit.

In the present embodiment, a mean in an individual chart is obtained by dividing the sum of individual readings by the number of readings, which is conventionally recorded as. It is to be noted that for the moving ranges having the sample size of 2, the number of moving ranges (MR) is one less than the number of individual readings.

In the present embodiment, the mean is calcu-

$$\overline{R} = \frac{\sum\limits_{i=1}^{n} X_i}{n} \ .$$

lated:

In the present embodiment, the upper control limit is calculated: $UCL_X = X + E_2 \overline{R}$, and control chart coefficients may be obtained by looking up the table.

In the present embodiment, the center line is: $CL = \overline{R}$.

In the present embodiment, the lower control limit is calculated: $LCL_X = X - E_2 \overline{R}$.

In the present embodiment, the moving range is calculated: $MR_i = |x_i - x_{i-1}|$.

In the present embodiment, the moving range

$$\overline{MR} = \frac{\sum\limits_{i=1}^{n} MR_i}{n} \ .$$

mean is calculated:

In the present embodiment, the upper control limit is calculated: $UCL_{MR} = D_4 \overline{MR}$, and control chart coefficients may be obtained by looking up the table.

In the present embodiment, the center line is: $CL = \overline{MR}$.

In the present embodiment, the lower control limit is calculated: $LCL_{MR} = D_3 \overline{MR}$, and control chart coefficients may be obtained by looking up the table.

Where D4, D3, and E2 are constants configured to group the calculated moving ranges, and vary with the sample size.

In the present embodiment, the specific parameters may be obtained by looking up the table, for example, when the subgroup capacity n=2, E2=2.660, D3=0.000, and D4=3.267.

Fig. 3 is a schematic diagram of specific steps of calculating distribution of quality data using a histogram to estimate a rate of unqualified products in a process in one embodiment of the present disclosure. As shown in Fig. 3, in the present embodiment, the data is processed and organized using the histogram, the distribution of the quality data is analyzed and mastered to estimate the rate of unqualified products in the process. The specific calculation steps are as follows.

At S31, data is acquired, with more than 50 samples.

At S32, a maximum value and a minimum value are retrieved, and a range is calculated.

At S33, a group number and a group interval are determined:

$$K=1+3.322*lqg(N)$$

At S34, a subgroup boundary is determined: lower boundary value of the first group=minimum value-measurement unit/2.

At S35, a frequency is counted, and the histogram is drawn.

In the present embodiment, it is observed whether a variable shows a certain trend over time using a trend chart. In a chart with a time axis as a horizontal axis and variables as a vertical axis, it is observed whether the variable shows a certain trend over time, so that a manager can grasp the dynamic trend of the management effect or the main performance parameters of the product at any time for analysis and improvement.

In the present embodiment, abnormality determination rules used can be customized by a user, and common process quality abnormality determination criteria are listed as follows.

(1) Criterion 1: One point is above (or below) a control line.

(2) Criterion 2: Nine or more consecutive points are on the same side of a center line.

(3) Criterion 3: Six or more consecutive points have a tendency to rise or fall.

(4) Criterion 4: Fourteen consecutive adjacent points alternate up and down on the center line.

(5) Criterion 5: Points repeatedly approach to a control limit for abnormality determination.

5A, at least two of three consecutive points approach to the control limit (outside an area B).

5b, at least three of seven consecutive points approach to the control limit (outside the area B).

5c, at least four of ten consecutive points approach to the control limit (outside the area B).

(6) Criterion 6: four of five consecutive points fall outside an area C on the same side of the center line.

(7) Criterion 7: Fifteen consecutive points fluctuate up and down in the area C.

(8) Criterion 8: Eight consecutive points are on both sides of the center line, but none in the area C.

(9) Criterion 9: Discontinuous chain, non-random arrangement.

9a, at least ten of eleven consecutive points are on one side of the center line.

9b, at least twelve of fourteen consecutive points are on one side of the center line.

9C, at least fourteen of seventeen consecutive points are on one side of the center line.

9d. at least sixteen of twenty points are on one side of the center line.

Embodiment 2

In addition to the process quality abnormality determination criteria described in above Embodiment 1, in the process of lithium battery production, it is also necessary to perform abnormality determination on a process control plan, i.e., upper and lower processing limits of key parameters, for example, no more than 80% of the process control plan, and the like. The above rules are customized and configurable in specific early warning models.

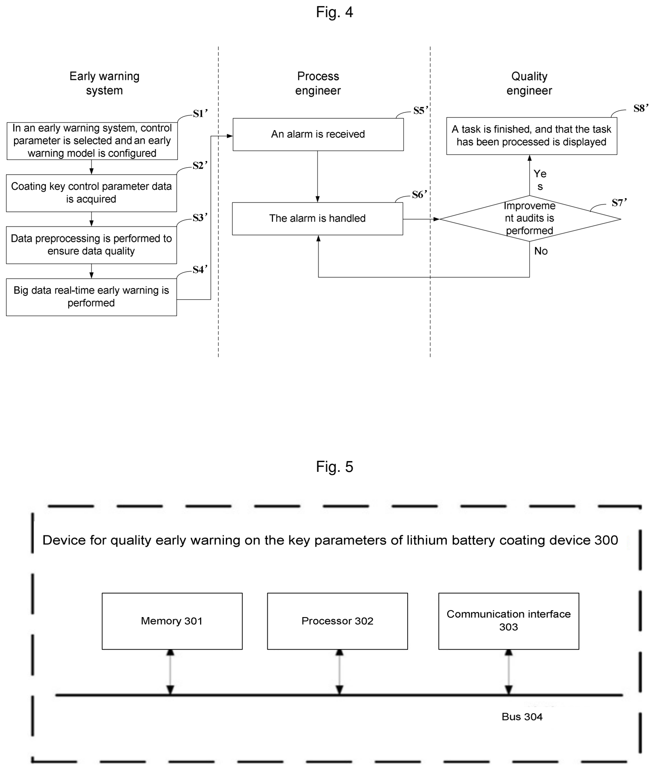

Fig. 4 is a schematic diagram of specific implementation steps of a quality early warning control method in another embodiment of the present disclosure. As shown in Fig. 4, in the present embodiment, after the early warning information is generated, engineers related to process and quality may intervene in analysis processing to ensure a closed loop of the entire quality early warning control. The implementation steps of the whole quality early warning control method are as follows.

At S1', in an early warning system, an early warning model based on control parameter configurations is selected.

At S2', coating key control parameter data is acquired.

At S3', data preprocessing is performed to ensure data quality.

At S4', big data real-time early warning is performed.

At S5', a process engineer receives an alarm.

At S6', the process engineer handles the alarm.

At S7', a quality engineer performs improvement audits.

At S8', if the audit is passed, the task is finished, and it is displayed that the task has been processed; and if not, S6' is jumped.

Fig. 5 is a schematic structural diagram of a device for quality early warning on the key parameters of a lithium battery coating device in one embodiment of the present disclosure. As shown in Fig. 5, a device 300 for determining a battery operating voltage curve includes a memory 301, a processor 302, a communication interface 303, and a bus 304.

The memory 301 may include a large capacity memory for data or instructions. By way of example, but not limitation, the memory 301 may include an HDD, a floppy disk drive, a flash memory, an optical disk, a magneto-optical disk, a magnetic tape, or a USB drive or a combination of two or more thereof. Where appropriate, the memory 301 may include a removable or non-removable (or fixed) medium. Where appropriate, the memory may 301 be inside or outside the device 300 for determining the battery operating voltage curve. In a specific embodiment, the memory 301 is a non-volatile solid-state memory. In a specific embodiment, the memory 301 includes an ROM. Where appropriate, the ROM may be a mask-programmed ROM, a PROM, an EPROM, an EEPROM, an EAROM or a flash memory or a combination of two or more thereof.

In one example, the processor 302 may include a Central Processing Unit (CPU), or an Application-Specific Integrated Circuit (ASIC), or

one or more integrated circuits configured to implement the embodiments of the present disclosure.

The communication interface 303 is mainly configured to achieve communication between modules and units in the embodiments of the present disclosure.

The memory 301, the processor 302, and the communication interface 303 are connected through the bus 304 and communicate with each other.

That is, the memory 301 is configured to store a program code. The processor 302 runs a program corresponding to the executable program code stored in the memory 301 by reading the executable program code for executing a method for quality early warning on key parameters of a lithium battery coating device. The method for quality early warning on the key parameters of the lithium battery coating device includes, but is not limited to, S1 to S8 in the above embodiments.

It is to be noted that the various embodiments in the present specification are described in a progressive manner, the same or similar parts between the various embodiments can be referred to each other, and each embodiment focuses on differences from other embodiments. For the apparatus embodiments, the relevant parts may be referred to the partial description of the method embodiment. The present disclosure is not limited to the specific steps and structures described above and shown in the figures. Those skilled in the art may make various changes, modifications, and additions, or change the order between steps, upon appreciation of the spirit of the present disclosure. Also, for the sake of brevity, a detailed description of known method techniques is omitted herein.

The functional modules and functional units shown in the above structural block diagrams may be implemented as hardware, software, firmware, or a combination thereof. When implemented in hardware, it may be, for example, an electronic circuit, an ASIC, appropriate firmware, a plug-in, a function card, or the like. When implemented in software, elements of the present disclosure are programs or code segments that are configured to perform required tasks. The program or code segment may be stored in a machine-readable medium or transmitted over a transmission medium or communication link by a data signal carried in a carrier wave. The "machine-readable medium" may include any medium capable of storing or transmitting information.

**Claims**

1. A method for quality early warning on key parameters of a lithium battery coating device, wherein the method comprises:

   S1, confirming coating process control parameters;
   S2, acquiring process data of the key control parameter, and transmitting the process data to a high-performance storage unit;
   S3, acquiring different control parameter configurations according to the process data, and selecting an applicable early warning model from no less than two Statistical Process Control (SPC) process quality early warning models;
   S4, selecting corresponding early warning criteria for the applicable early warning model;
   S5, performing a preprocessing check on coating process control state data in the process data to obtain control parameter check data;
   S6, according to the corresponding early warning criteria, performing window calculation on the control parameter check data using a Flink big data calculation framework, so as to obtain real-time key parameter early warning information; and
   S7, analyzing and processing the real-time key parameter early warning information to obtain coating process control data, so as to control the coating process key control parameters to be in an applicable range.

2. The method for quality early warning on the key parameters of the lithium battery coating device as claimed in claim 1, wherein, in the S1, methods for confirming the coating process key control parameters comprise expert scoring, Failure Mode and Effects Analysis (FMEA), and statistics and analysis of historical issues.

3. The method for quality early warning on the key parameters of the lithium battery coating device as claimed in claim 1, wherein, in the S2, methods for acquiring the process data comprise: automated device reporting and an Internet Of Things (IOT) platform.

4. The method for quality early warning on the key parameters of the lithium battery coating device as claimed in claim 1, wherein, in the S3, the SPC process quality early warning models comprise: a mean-range control chart, a mean-standard deviation control chart, an individual-moving range control chart, a pass rate chart, a histogram, and a trend chart.

5. The method for quality early warning on the key parameters of the lithium battery coating device as claimed in claim 4, wherein, in the mean-range control chart, a subgroup sample mean $\overline{X}_i$, an inter-group mean $\overline{\overline{X}}$, a sample range $R_i$, and a range mean $\overline{R}$ are calculated using the a following logic:

$$\overline{X}_i = \frac{X_1 + X_2 + ... + X_n}{n} = \frac{\sum\limits_{i=1}^{n} X_i}{n} ;$$

$$\overline{\overline{X}} = \frac{X_1 + X_2 + ... + X_m}{m} = \frac{\sum\limits_{i=1}^{m} X_i}{m} ;$$

$$R_i = \max\{X_i\} - \min\{X_i\} ;$$

$$\overline{R} = \frac{R_1 + R_2 + ... + R_m}{m} = \frac{\sum\limits_{i=1}^{m} R_i}{m} ;$$

an upper control limit UCL, a center line CL, and a lower control limit LCL of a mean $\overline{X}$ chart are calculated using a following logic:

$$UCL = \overline{\overline{X}} + A_2 \overline{R} ;$$

$$CL = \overline{\overline{X}} ;$$

$$LCL = \overline{\overline{X}} - A_2 \overline{R} ;$$

an upper control limit UCL, a center line CL, and a lower control limit LCL of a range R chart are calculated using a following logic:

$$UCL = D_4 \overline{R} ;$$

$$CL = \overline{R} ;$$

$$LCL = D_3 \overline{R} ;$$

where D4, D3, and A2 are constants that vary with a sample size, n is a sample size within a group, and m is the number of sampling groups.

6. The method for quality early warning on the key parameters of the lithium battery coating device as claimed in claim 4, wherein, in the mean-standard deviation control chart, a subgroup sample mean $\overline{X}_i$, an inter-group mean $\overline{\overline{X}}$, a subgroup standard deviation $S_i$, a standard deviation mean $\overline{S}$, and a standard deviation $\sigma$ are calculated using a following logic:

$$\overline{X}_i = \frac{X_1 + X_2 + ... + X_n}{n} = \frac{\sum\limits_{i=1}^{n} X_i}{n} ;$$

$$\overline{\overline{X}} = \frac{X_1 + X_2 + ... + X_m}{m} = \frac{\sum\limits_{i=1}^{m} X_i}{m} ;$$

$$S_i = \sqrt{\frac{\sum\limits_{i=1}^{n} (X_i - \overline{X})^2}{n-1}} ;$$

$$\bar{S} = \frac{1}{m} \sum_{i=1}^{m} S_i$$

$$\sigma = \frac{\bar{S}}{C_4} ;$$

an upper control limit UCL, a center line CL, and a lower control limit LCL of a mean $\bar{X}$ control chart are calculated using a following logic:

$$UCL = \bar{\bar{X}} + A_3 \bar{S} ;$$

$$CL = \bar{\bar{X}} ;$$

$$LCL = \bar{\bar{X}} - A_3 \bar{S} ;$$

an upper control limit UCLs, a center line CLs, and a lower control limit LCLs of a standard deviation S control chart are calculated using the following logic:

$$UCLs = B_4 \bar{S} ;$$

$$CLs = \bar{S} ;$$

$$LCLs = B_3 \bar{S} ;$$

where B4, B3, and A3 are constants that vary with a sample size.

7. The method for quality early warning on the key parameters of the lithium battery coating device as claimed in claim 4, wherein, in the individual-moving range control chart, a range mean $\bar{R}$, an upper control limit UCLx, a center line CL, a lower control limit LCLx, a moving range $MR_i$, a moving range mean $\overline{MR}$, a moving range upper control limit UCL$_{MR}$, a moving range center line CL, and a moving range lower control limit are calculated using a following logic:

$$\bar{R} = \frac{\sum_{i=1}^{n} X_i}{n} ;$$

$$UCL_X = X + E_2 \bar{R} ;$$

$$CL = \bar{R} ;$$

$$LCL_X = X - E_2 \bar{R} ;$$

$$MR_i = \left| x_i - x_{i-1} \right| ;$$

$$\overline{MR} = \frac{\sum_{i=1}^{n} MR_i}{n} ;$$

$$UCL_{MR} = D_4 \overline{MR} ;$$

$$CL = \overline{MR} ;$$

$$LCL_{MR} = D_3 \overline{MR} ;$$

where D4, D3, and E2 are configured to group the calculated moving ranges.

8. The method for quality early warning on the key parameters of the lithium battery coating device as claimed in claim 1, wherein the S3 comprises:

S31, collecting a preset number of coating process control data samples;
S32, retrieving a sample maximum value, a sample minimum value, and a sample range of the coating process control data samples;
S33, determining a group number and a group interval of the coating process control data samples;
S34, determining a subgroup boundary of the coating process control data samples; and
S35, according to a preset statistical frequency, drawing a histogram according to the sample maximum value, the sample minimum value, the sample range, the group number, the group interval, and the subgroup boundary.

9. The method for quality early warning on the key parameters of the lithium battery coating device as claimed in claim 8, wherein, in the S33, the group number and the group interval are determined using a following logic:

$$K = 1 + 3.322 * lqg(N)$$ ;

where N represents the number of samples and K is the group number.

10. A apparatus for quality early warning on key parameters of a lithium battery coating device, wherein the apparatus comprises:

a parameter determination module, configured to confirm coating process control parameters;
a process data acquisition and storage module, configured to acquire process data of the key control parameter, and transmit the process data to a high-performance storage unit, the process data acquisition and storage module being connected to the parameter determination module;
a model selection module, configured to acquire different control parameter configurations according to the process data, and select an applicable early warning model from no less than two Statistical Process Control (SPC) process quality early warning models, the model selection module being connected to the process data acquisition and storage module;
an early warning rule selection module, configured to select corresponding early warning criteria for the applicable early warning model, the early warning rule selection module being connected to the model selection module;
a control state data check module, configured to perform a preprocessing check on coating process control state data in the process data to obtain control parameter check data, the control state data check module being connected to the process data acquisition and storage module;
a real-time early warning information retrieval module, configured to, according to the corresponding early warning criteria, perform window calculation on the control parameter check data using a Flink big data calculation framework, so as to obtain real-time key parameter early warning information, the real-time early warning information retrieval module being connected to the control state data check module and the early warning rule selection module; and
a process control module, configured to analyze and process the real-time key parameter early warning information to obtain coating process control data, so as to control the coating process key control parameters to be in an applicable range, the process control module being connected to the real-time early warning information retrieval module.

11. The apparatus for quality early warning on the key parameters of the lithium battery coating device as claimed in claim 10, wherein, in the parameter determination module, methods for confirming the coating process key control parameters comprise expert scoring, Failure Mode and Effects Analysis (FMEA), and statistics and analysis of historical issues.

12. The apparatus for quality early warning on the key parameters of the lithium battery coating device as claimed in claim 10, wherein, in the process data acquisition and storage module, methods for acquiring the process data comprise: automated device reporting and an Internet Of Things (IOT) platform.

13. The apparatus for quality early warning on the key parameters of the lithium battery coating device as claimed in claim 10, wherein, in the model selection module, the SPC process quality early warning models comprise: a mean-range control chart, a mean-standard deviation control chart, an individual-moving range control chart, a pass rate chart, a histogram, and a trend chart.

14. The apparatus for quality early warning on the key parameters of the lithium battery coating device as claimed in claim 13, wherein the model selection module comprises:
a mean-range control chart mean processing unit, configured to, in the mean-range control chart, calculate a subgroup sample mean $\overline{X}_i$, an inter-group mean $\overline{\overline{X}}$, a sample range $R_i$, and a range mean $\overline{R}$ using a following logic:

$$\overline{X}_i = \frac{X_1 + X_2 + ... + X_n}{n} = \frac{\sum_{i=1}^{n} X_i}{n}$$ ;

$$\overline{\overline{X}} = \frac{X_1 + X_2 + ... + X_m}{m} = \frac{\sum_{i=1}^{m} X_i}{m}$$ ;

$$R_i = \max\{X_i\} - \min\{X_i\}$$ ;

$$\overline{R} = \frac{R_1 + R_2 + ... + R_m}{m} = \frac{\sum\limits_{i=1}^{m} R_i}{m} \; ;$$

an upper control limit, lower control limit and center line processing unit, configured to calculate an upper control limit UCL, a center line CL, and a lower control limit LCL of a mean $\overline{X}$ chart using a following logic:

$$UCL = \overline{\overline{X}} + A_2 \overline{R} \; ;$$

$$CL = \overline{\overline{X}} \; ;$$

$$LCL = \overline{\overline{X}} - A_2 \overline{R} \; ;$$

a range R chart upper limit, lower limit and center line processing unit, configured to calculate an upper control limit UCL, a center line CL, and a lower control limit LCL of a range R chart using a following logic:

$$UCL = D_4 \overline{R} \; ;$$

$$CL = \overline{R} \; ;$$

$$LCL = D_3 \overline{R} \; ;$$

where D4, D3, and A2 are constants that vary with a sample size, n is a sample size within the group, and m is the number of sampling groups.

15. The apparatus for quality early warning on the key parameters of the lithium battery coating device as claimed in claim 13, wherein the model selection module further comprises:
a mean-standard deviation control chart mean processing unit, configured to, in the mean-standard deviation control chart, calculate a subgroup sample mean $\overline{X}_i$, an inter-group mean $\overline{\overline{X}}$, a subgroup standard deviation $S_i$, a standard deviation mean $\overline{S}$, and a standard deviation $\sigma$ using a following logic:

$$\overline{X}_i = \frac{X_1 + X_2 + ... + X_n}{n} = \frac{\sum\limits_{i=1}^{n} X_i}{n} \; ;$$

$$\overline{\overline{X}} = \frac{X_1 + X_2 + ... + X_m}{m} = \frac{\sum\limits_{i=1}^{m} X_i}{m} \; ;$$

$$S_i = \sqrt{\frac{\sum\limits_{i=1}^{n} (X_i - \overline{X})^2}{n-1}} \; ;$$

$$\overline{S} = \frac{1}{m} \sum\limits_{i=1}^{m} S_i \; ;$$

$$\sigma = \frac{\overline{S}}{C_4} \; ;$$

a mean control chart upper limit, lower limit and center line processing unit, configured to calculate an upper control limit UCL, a center line CL, and a lower control limit LCL of a mean $\overline{X}$ control chart using a following logic:

$$UCL = \overline{\overline{X}} + A_3 \overline{S} \; ;$$

$$CL = \overline{\overline{X}} \; ;$$

$$LCL = \overline{\overline{X}} - A_3 \overline{S} \; ;$$

a standard deviation S control chart upper limit, lower limit and center line processing unit, configured to calculate an upper control limit UCLs, a center line CLs, and a lower control limit LCLs of a standard deviation S control chart using a following logic:

$$UCLs = B_4 \overline{S} \; ;$$

$$CLs = \overline{S} \; ;$$

$$LCLs = B_3 \overline{S}$$ ;

where B4, B3, and A3 are constants that vary with a sample size.

16. The apparatus for quality early warning on the key parameters of the lithium battery coating device as claimed in claim 13, wherein the model selection module further comprises:
an individual-moving range control chart processing unit, configured to, in the individual-moving range control chart, calculate a range mean $\overline{R}$, an upper control limit UCLx, a center line CL, a lower control limit LCLx, a moving range $MR_i$, a moving range mean $\overline{MR}$, a moving range upper control limit $UCL_{MR}$, a moving range center line CL, and a moving range lower control limit using the following logic:

$$\overline{R} = \frac{\sum\limits_{i=1}^{n} X_i}{n}$$ ;

$$UCL_X = X + E_2 \overline{R}$$ ;

$$CL = \overline{R}$$ ;

$$LCL_X = X - E_2 \overline{R}$$ ;

$$MR_i = \left| x_i - x_{i-1} \right|$$ ;

$$\overline{MR} = \frac{\sum\limits_{i=1}^{n} MR_i}{n}$$ ;

$$UCL_{MR} = D_4 \overline{MR}$$ ;

$$CL = \overline{MR}$$ ;

$$LCL_{MR} = D_3 \overline{MR}$$ ;

where D4, D3, and E2 are configured to group the calculated moving ranges.

17. The apparatus for quality early warning on the key parameters of the lithium battery coating device as claimed in claim 10, wherein the model selection module further comprises:

a sample collection unit, configured to collect a preset number of coating process control data samples;
an extreme value and range processing unit, configured to retrieve a sample maximum value, a sample minimum value, and a sample range of the coating process control data samples;
a sample group number and group interval determination unit, configured to determine a group number and a group interval of the coating process control data samples;
a subgroup boundary drive unit, configured to determine a subgroup boundary of the coating process control data samples; and
a histogram generation unit, configured to, according to a preset statistical frequency, draw a histogram according to the sample maximum value, the sample minimum value, the sample range, the group number, the group interval, and the subgroup boundary.

18. The apparatus for quality early warning on the key parameters of the lithium battery coating device as claimed in claim 17, wherein, in the sample group number and group interval determination unit, the group number and the group interval are determined using a following logic:

$$K=1+3.322*lqg(N)$$ ;

where N represents the number of samples and K is the group number.

19. A device for quality early warning on the key parameters of a lithium battery coating device, comprising: a memory, a processor, a communication interface, and a bus;

the memory, the processor, and the communication interface are connected through the bus and communicate with each other;
the memory is configured to store a program code; and
the processor runs a program corresponding to the executable program code by reading the executable program code stored in the memory, so as to perform a method for quality early warning on the key parameters of the lithium battery coating device, wherein the method for quality early warning on the key parameters of

**EP 4 675 380 A1**

the lithium battery coating device comprises:

confirming coating process control parameters;

acquiring process data of the key control parameter, and transmitting the process data to a high-performance storage unit;

acquiring different control parameter configurations according to the process data, and selecting an applicable early warning model from no less than two Statistical Process Control (SPC) process quality early warning models;

selecting corresponding early warning criteria for the applicable early warning model;

performing a preprocessing check on coating process control state data in the process data to obtain control parameter check data;

according to the corresponding early warning criteria, performing window calculation on the control parameter check data using a Flink big data calculation framework, so as to obtain real-time key parameter early warning information; and

analyzing and processing the real-time key parameter early warning information to obtain coating process control data, so as to control the coating process key control parameters to be in an applicable range.

Fig. 1

```
                    ┌─────────────┐
                    │    Start    │
                    └─────────────┘
                           │
                           ▼                                    ⌐ S1
┌──────────────────────────────────────────────────────────┐
│ Coating process key control parameters are confirmed       │
│ by means of expert scoring, brainstorming, Failure         │
│ Mode and Effects Analysis (FMEA), statistics and           │
│ analysis of historical issues, and the like                │
└──────────────────────────────────────────────────────────┘
                           │
                           ▼                                    ⌐ S2
┌──────────────────────────────────────────────────────────┐
│ Key control parameter process data is acquired by          │
│ means of manual testing, automated device reporting,       │
│ an Internet Of Things (IOT) platform, and the like, and    │
│ provided to a high-performance storage unit                │
└──────────────────────────────────────────────────────────┘
                           │
                           ▼                                    ⌐ S3
┌──────────────────────────────────────────────────────────┐
│ An applicable early warning model is selected              │
│ according to different control parameter configurations    │
└──────────────────────────────────────────────────────────┘
                           │
                           ▼                                    ⌐ S4
┌──────────────────────────────────────────────────────────┐
│ Corresponding applicable early warning rules are           │
│ selected for the early warning model based on the          │
│ control parameter configurations                           │
└──────────────────────────────────────────────────────────┘
                           │
                           ▼                                    ⌐ S5
┌──────────────────────────────────────────────────────────┐
│ A data acquisition system is brought into                  │
│ communication with a device for the key control            │
│ parameters to ensure prompt reporting of data              │
└──────────────────────────────────────────────────────────┘
                           │
                           ▼                                    ⌐ S6
┌──────────────────────────────────────────────────────────┐
│ A preprocessing check is performed on data acquired        │
│ in real time                                               │
└──────────────────────────────────────────────────────────┘
                           │
                           ▼                                    ⌐ S7
┌──────────────────────────────────────────────────────────┐
│ Window calculation is performed using a Flink big data     │
│ calculation framework to perform real-time early           │
│ warning on key parameters                                  │
└──────────────────────────────────────────────────────────┘
                           │
                           ▼                                    ⌐ S8
┌──────────────────────────────────────────────────────────┐
│ On-site production personnel analyze and process           │
│ early warning information to ensure the normal             │
│ processing of the key control parameters in a single       │
│ process                                                    │
└──────────────────────────────────────────────────────────┘
                           │
                           ▼
                    ┌─────────────┐
                    │     End     │
                    └─────────────┘
```

Fig. 2

```
┌──────────────────┐      ┌──────────────┐
│  MySQL rule table │─────▶│  Broadcast   │────┐
└──────────────────┘      │    stream    │    │
                          └──────────────┘    │
                                              │
┌──────────────────┐      ┌──────────────┐    │
│  Data source such│─────▶│  Mainstream  │────┤
│    as Kafka      │      └──────────────┘    │
└──────────────────┘                          │
```

```
        ┌─────────────┐     ┌──────────────┐     ┌──────────────────────────────────────┐
───────▶│  Two-stream │────▶│  Customize   │────▶│  Perform grouping according to process,│
        │    join     │     │  a time      │     │  work step, and control parameters of  │
        └─────────────┘     │  window      │     │  a tenant                              │
                            └──────────────┘     └──────────────────────────────────────┘
```

```
              ┌────────────────────┐         ┌────────────────────┐
              │  Perform early      │         │  Write into different│
              │  warning by means   │         │  tenant tables      │
              │  of sending email   │         └────────────────────┘
              └────────────────────┘
```

Fig. 3

```
                    ┌──────────┐
                    │   Start  │
                    └────┬─────┘
                         │                                    S31
        ┌────────────────▼──────────────────────────┐
        │                                            │
        │   Data, with more than 50 samples is       │
        │   acquired                                 │
        │                                            │
        └────────────────┬──────────────────────────┘
                         │                                    S32
        ┌────────────────▼──────────────────────────┐
        │                                            │
        │   A maximum value and a minimum value, and │
        │   calculate a range are retrieved          │
        │                                            │
        └────────────────┬──────────────────────────┘
                         │                                    S33
        ┌────────────────▼──────────────────────────┐
        │                                            │
        │   A group number and a group interval are  │
        │   determined                               │
        │                                            │
        └────────────────┬──────────────────────────┘
                         │                                    S34
        ┌────────────────▼──────────────────────────┐
        │                                            │
        │   A subgroup boundary is determined: lower │
        │   boundary value of the first group=minimum│
        │   value-measurement unit/2                 │
        │                                            │
        └────────────────┬──────────────────────────┘
                         │                                    S35
        ┌────────────────▼──────────────────────────┐
        │                                            │
        │   A frequency is counted, and a histogram  │
        │   is drawn                                 │
        │                                            │
        └────────────────┬──────────────────────────┘
                         │
                    ┌────▼─────┐
                    │   End    │
                    └──────────┘
```

Fig. 4

| Early warning system | Process engineer | Quality engineer |
|---|---|---|

S1'
In an early warning system, control parameter is selected and an early warning model is configured

S2'
Coating key control parameter data is acquired

S3'
Data preprocessing is performed to ensure data quality

S4'
Big data real-time early warning is performed

S5'
An alarm is received

S6'
The alarm is handled

S8'
A task is finished, and that the task has been processed is displayed

Yes

S7'
Improvement audits is performed

No

Fig. 5

Device for quality early warning on the key parameters of lithium battery coating device 300

Memory 301

Processor 302

Communication interface 303

Bus 304

## INTERNATIONAL SEARCH REPORT

| International application No. |
| --- |
| **PCT/CN2023/129295** |

**A. CLASSIFICATION OF SUBJECT MATTER**

G05B 19/418(2006.01)i

According to International Patent Classification (IPC) or to both national classification and IPC

**B. FIELDS SEARCHED**

Minimum documentation searched (classification system followed by classification symbols)

IPC: G05B

Documentation searched other than minimum documentation to the extent that such documents are included in the fields searched

Electronic data base consulted during the international search (name of data base and, where practicable, search terms used)

CNTXT, CJFD, ENTXTC, VEN, ENTXT: 锂电, 锂电池, 质量, 打分, 电池, 国轩高科, 监测, 检测, 控制图, 模型, 涂布, 预测, 预警, 预判, SPC, lithium battery, coating, pre-warning, quality, forecast, anticipate, model, battery, detect, control, diagram, graph

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107728591 A (CHINA AVIATION LITHIUM BATTERY (JIANGSU) CO., LTD.) 23 February 2018 (2018-02-23)<br>  description, paragraphs [0003]-[0024], and figures 1-2 | 1-19 |
| Y | CN 104155524 A (CHINA AVIATION LITHIUM BATTERY (LUOYANG) CO., LTD.) 19 November 2014 (2014-11-19)<br>  description, paragraphs [0003]-[0056], and figures 1-5 | 1-19 |
| PX | CN 116954174 A (HEFEI GUOXUAN HIGH-TECH POWER ENERGY CO., LTD.) 27 October 2023 (2023-10-27)<br>  description, paragraphs [0007]-[0198], and figures 1-4 | 1-19 |
| A | CN 107958988 A (INSTITUTE OF AUTOMATION, CHINESE ACADEMY OF SCIENCES) 24 April 2018 (2018-04-24)<br>  entire document | 1-19 |
| A | CN 116150703 A (HEFEI GUOXUAN HIGH-TECH POWER ENERGY CO., LTD.) 23 May 2023 (2023-05-23)<br>  entire document | 1-19 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 April 2024** | **24 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/129295**

## C. DOCUMENTS CONSIDERED TO BE RELEVANT

| Category* | Citation of document, with indication, where appropriate, of the relevant passages | Relevant to claim No. |
|---|---|---|
| A | CN 114280371 A (HEFEI GUOXUAN HIGH-TECH POWER ENERGY CO., LTD.) 05 April 2022 (2022-04-05)<br>entire document | 1-19 |
| A | CN 114749342 A (SOUTH CHINA UNIVERSITY OF TECHNOLOGY) 15 July 2022 (2022-07-15)<br>entire document | 1-19 |
| A | WO 2023090568 A1 (LG ENERGY SOLUTION, LTD.) 25 May 2023 (2023-05-25)<br>entire document | 1-19 |
| A | JP 2015071127 A (NISSAN MOTOR CO., LTD.) 16 April 2015 (2015-04-16)<br>entire document | 1-19 |

Form PCT/ISA/210 (second sheet) (July 2022)

**INTERNATIONAL SEARCH REPORT**
Information on patent family members

| International application No. |
| --- |
| **PCT/CN2023/129295** |

| Patent document cited in search report | | | Publication date (day/month/year) | Patent family member(s) | | | Publication date (day/month/year) |
| --- | --- | --- | --- | --- | --- | --- | --- |
| CN | 107728591 | A | 23 February 2018 | None | | | |
| CN | 104155524 | A | 19 November 2014 | None | | | |
| CN | 116954174 | A | 27 October 2023 | None | | | |
| CN | 107958988 | A | 24 April 2018 | None | | | |
| CN | 116150703 | A | 23 May 2023 | None | | | |
| CN | 114280371 | A | 05 April 2022 | None | | | |
| CN | 114749342 | A | 15 July 2022 | None | | | |
| WO | 2023090568 | A1 | 25 May 2023 | KR | 20230074973 | A | 31 May 2023 |
| | | | | EP | 4261635 | A1 | 18 October 2023 |
| JP | 2015071127 | A | 16 April 2015 | JP | 6229417 | B2 | 15 November 2017 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115701851 A

- CN 115876589 A